# FASCICULE DE BREVET EUROPEEN

(11) **EP 1 215 072 B1**
(45) Date de publication et mention de la délivrance du brevet: **19.04.2006**
(21) Numéro de dépôt: 01403226.2
(22) Date de dépôt: 12.12.2001
(51) Int. Cl.: B60K 35/00, G02B 27/01

(54) **Installation d'assistance à la conduite pour un véhicule automobile**
Fahrunterstützungssystem für Kraftfahrzeug
Driving assistance arrangement for motor vehicle

(30) Priorité: 13.12.2000 FR 0016256
(43) Date de publication de la demande: 19.06.2002
(73) Titulaire: Peugeot Citroen Automobiles SA, 92200 Neuilly sur Seine (FR)
(72) Inventeur: Brame, Jean-Luc, 75014 Paris (FR)
(74) Mandataire: Domenego, Bertrand

(56) Documents cités:
- DE-A- 4 319 904
- DE-A- 19 800 202
- DE-A- 19 826 283
- GB-A- 2 216 856

## Description

La présente invention concerne une installation d'assistance à la conduite pour un véhicule automobile, du type comportant :
- des moyens de mesure de la vitesse du véhicule ;
- des moyens d'affichage en superposition, suivant l'axe de vision du conducteur, d'un motif de référence dont au moins une dimension est variable avec la vitesse du véhicule, le motif de référence permettant au conducteur de comparer la distance le séparant du véhicule précédent et une distance de sécurité préconisée pour la vitesse du véhicule, par comparaison d'au moins une dimension du motif de référence et d'une dimension correspondante du contour apparent du véhicule précédent.

Une telle installation d'assistance à la conduite est connue du document GB 2 216 856 A.

Dans le trafic routier, de nombreuses collisions surviennent entre deux véhicules roulant l'un derrière l'autre.

Afin d'éviter de percuter le véhicule qui le précède, le conducteur d'un véhicule cherche à maintenir, entre son véhicule et lé véhicule le précédant, une distance dite de sécurité. Cette distance correspond à la somme de la distance parcourue pendant le temps de réaction du conducteur et à la distance de freinage effectif du véhicule.

Cette distance de sécurité est d'autant plus longue que la vitesse du véhicule est élevée. Pour chaque vitesse du véhicule, une distance de sécurité est préconisée par les services responsables de la sécurité routière. La distance de sécurité préconisée est donnée en fonction de la vitesse du véhicule par une formule de calcul connue.

Actuellement, afin de respecter les distances de sécurité préconisées, les conducteurs évaluent de manière empirique la distance les séparant du véhicule qui les précède. Ce calcul s'effectue par exemple par comptage des bandes marquées au sol s'étendant entre le véhicule et le véhicule le précédant.

Par ailleurs, le document FR 2.638.687 A propose une installation d'assistance à la conduite pour un véhicule automobile telle que définie précédemment. Dans cette installation, le motif de référence affiché sur le pare-brise du véhicule consiste en une barre horizontale, dont la longueur correspond à la largeur moyenne d'un véhicule se trouvant à la distance de sécurité, la largeur du véhicule étant celle perçue par le conducteur du véhicule.

La comparaison visuelle de la largeur de la barre affichée sur le pare-brise et de la largeur perçue du véhicule est relativement délicate notamment puisque la barre peut, suivant les circonstances, se trouver soit superposée au véhicule, soit, au contraire, décalée au-dessous du véhicule.

De plus, le véhicule peut se trouver décalé vers la droite ou vers la gauche, ce qui rend difficile la comparaison de la longueur du trait avec la largeur apparente du véhicule.

L'invention a pour but de proposer une installation d'assistance à la conduite pour un véhicule automobile ne présentant pas les inconvénients mentionnés ci-dessus, et qui, en particulier, soit facile à interpréter par l'utilisateur.

A cet effet, l'invention a pour objet une installation d'assistance à la conduite pour un véhicule automobile, du type précité, caractérisée par la seconde partie de la revendication 1.

Suivant des modes particuliers de réalisation, l'installation comporte l'une ou plusieurs des caractéristiques suivantes :
- elle comporte des moyens d'estimation de la distance séparant le véhicule du véhicule le précédant, et des moyens de comparaison de la distance estimée et de la distance de sécurité préconisée pour la vitesse du véhicule, et lesdits moyens d'affichage sont adaptés pour modifier l'aspect du motif de référence si la distance estimée dépasse la distance de sécurité préconisée ;
- lesdits moyens d'affichage sont adaptés pour l'affichage du motif de référence sous une forme fixe, si la distance estimée est inférieure à la distance de sécurité préconisée, et sous une forme clignotante, si la distance estimée est supérieure à la distance de sécurité préconisée ;
- lesdits moyens d'affichage sont adaptés pour l'affichage du motif de référence avec une première couleur, si la distance estimée est inférieure à la distance de sécurité préconisée, et avec une seconde couleur, si la distance estimée est supérieure à la distance de sécurité préconisée ;
- lesdits moyens d'affichage sont adaptés pour l'affichage de l'image sur le pare-brise du véhicule automobile;
- lesdits moyens d'affichage comportent une lame semi-réfléchissante disposée suivant l'axe de vision du conducteur et des moyens de projection du motif de référence sur ladite lame semi-réfléchissante ;
- lesdits moyens d'affichage comportent des moyens de projection dudit motif de référence bidimensionnel, et lesdits moyens pour modifier, suivant les deux directions, la taille dudit contour comportent au moins une lentille mobile disposée en sortie des moyens de projection et des moyens de déplacement de la ou chaque lentille ;
- ledit motif de référence comporte, dans sa partie centrale, délimitée par ledit contour, une région transparente laissant percevoir le véhicule précédent ; et
- elle comporte des moyens d'estimation de la distance séparant le véhicule du véhicule le précédant, et lesdits moyens d'affichage sont adaptés pour l'affichage en superposition, suivant l'axe de vision du conducteur, de la distance séparant le véhicule du véhicule le précédant.

L'invention sera mieux comprise à la lecture de la description qui va suivre, donnée uniquement à titre d'exemple et faite en se référant aux dessins, sur lesquels :
- la figure 1 est une vue schématique de l'installation d'assistance à la conduite selon l'invention ;
- la figure 2 est une vue schématique du système d'affichage de l'installation de la figure 1 ; et
- les figures 3 et 4 sont des vues illustrant l'affichage obtenu sur le pare-brise à partir de l'installation d'assistance selon l'invention.

L'installation d'assistance à la conduite selon l'invention est destinée à être utilisée dans un véhicule automobile. Elle est destinée notamment à permettre au conducteur du véhicule d'évaluer la distance le séparant du véhicule roulant devant lui et plus précisément de comparer cette distance à la distance de sécurité préconisée pour la vitesse de déplacement actuel de son véhicule.

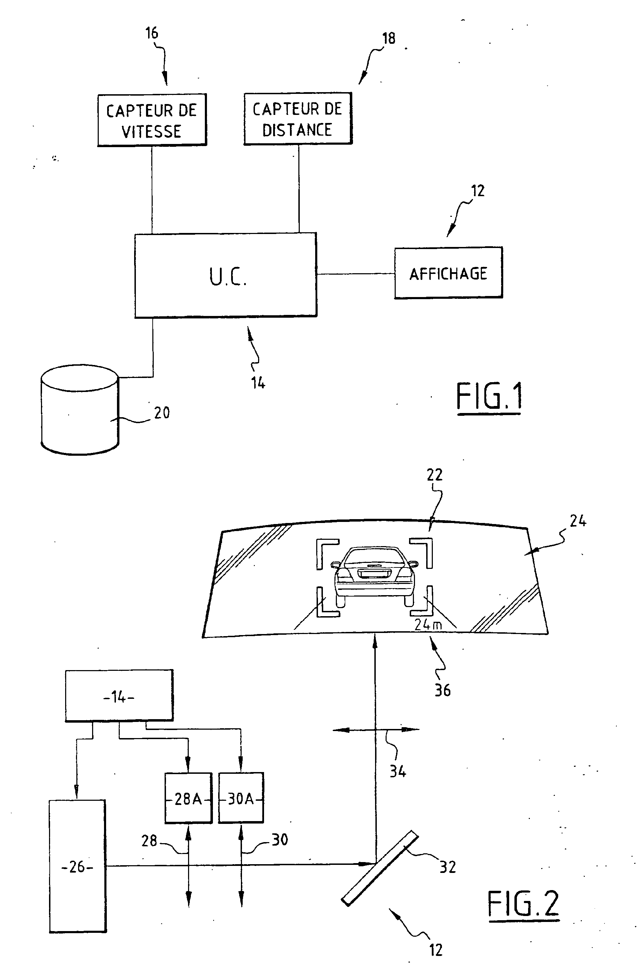

A cet effet, l'installation d'assistance comporte des moyens 12 d'affichage en superposition suivant l'axe de vision du conducteur d'un motif de référence. Ces moyens d'affichage, illustrés sur la figure 2, seront décrits en détail dans la suite de la description. Les moyens d'affichage 12 sont reliés à une unité de traitement d'informations 14 assurant la commande des moyens d'affichage 12. Cette unité de traitement d'informations est reliée à un capteur de vitesse 1 6 permettant de déterminer la vitesse instantanée du véhicule.

En outre, l'unité de traitement d'informations 14 est avantageusement reliée à un capteur de distance 18 permettant de déterminer la distance effective séparant le véhicule du véhicule le précédant. Ce capteur de distance est constitué par exemple d'un radar ou d'un lidar implanté à l'avant du véhicule.

Enfin, l'unité de traitement d'informations 14 est reliée à une base de données 20 dans laquelle sont mémorisés au moins des motifs de référence bidimensionnels pouvant être affichés par les moyens d'affichage 12. En outre, la base de données comporte des distances de sécurité préconisées pour différentes vitesses du véhicule dans sa plage de fonctionnement. En variante, une loi de calcul de la distance de sécurité préconisée en fonction de la vitesse du véhicule est mémorisée dans les moyens de stockage 20.

Selon l'invention, les moyens d'affichage 12 sont adaptés pour afficher, sous la commande de l'unité centrale de traitement d'informations 14, un motif de référence bidirectionnel délimitant un contour 22, illustré sur la figure 2, ce contour étant représentatif du contour apparent d'un véhicule précédent, séparé du véhicule, de la distance de sécurité préconisée pour la vitesse de circulation actuelle du véhicule.

Les moyens d'affichage illustrés sur la figure 2 comportent une source d'images telle qu'un projecteur 26 propre à émettre un faisceau lumineux représentant le motif de référence 22 à afficher en superposition sur le pare-brise, noté 24, du véhicule. Le projecteur 26 est relié à l'unité centrale de traitement d'informations 14.

Deux lentilles 28, 30 sont disposées successivement suivant le chemin optique en sortie du projecteur 26. Ces lentilles sont montées déplaçables chacune sous la commande d'un actionneur 28A, 30A pilote depuis l'unité de traitement d'informations 14.

En sortie de la lentille 30, le faisceau lumineux est réfléchi par un miroir 32 avant de traverser une lentille 34 et d'enfin aboutir sur le pare-brise 24 du véhicule automobile. Le déplacement des lentilles 28 et 30, sous la commande de l'unité de traitement d'informations 14, permet de modifier, suivant deux directions, la taille du contour affiché sur le pare-brise 24.

Dans le mode de réalisation considéré, le contour défini par le motif 22 constitue un cadre généralement rectangulaire et est délimité par quatre éléments angulaires en forme d'équerres disposés aux quatre coins du contour. Ainsi, la partie centrale du motif 22 est dépourvue de tout élément d'image, laissant ainsi un espace libre permettant au conducteur de voir clairement la route et le véhicule qui le précède.

Selon l'invention, la taille du contour varie en fonction de la vitesse du véhicule, sous la commande de l'unité de traitement d'informations 14, afin que les deux dimensions du contour affiché sur le pare-brise 24 du véhicule aient les dimensions du contour apparent d'un véhicule situé à la distance de sécurité.

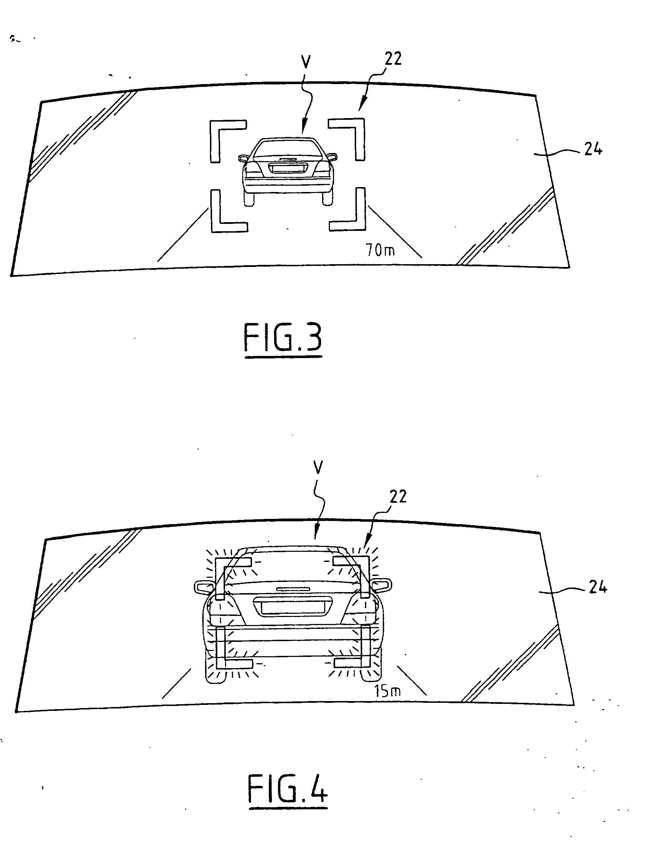

Sur les figures 3 et 4, est représenté le pare-brise d'un véhicule automobile équipé d'un dispositif d'assistance selon l'invention. Sur ces deux figures, le véhicule est supposé rouler à la même vitesse, de sorte que les dimensions du motif de référence 22 sont identiques sur les deux figures.

Sur la figure 3, le véhicule précédent, désigné par la lettre V, a son contour apparent, c'est-à-dire le contour tel que perçu par l'utilisateur complètement contenu à l'intérieur de la zone libre délimitée par le contour du motif de référence. Ainsi, le conducteur peut facilement conclure que le véhicule V est à une distance supérieure à la distance de sécurité préconisée.

En revanche, dans le cas représenté sur la figure 4, le véhicule V a son contour apparent qui déborde du contour défini par le motif de référence 22. Ainsi, le conducteur peut facilement conclure qu'il suit de trop près le véhicule le précédent et que la distance les séparant est inférieure à la distance de sécurité préconisée.

Par ailleurs, avantageusement, les moyens d'affichage 12 sont adaptés pour modifier l'aspect du motif de référence 22 mis à la disposition du conducteur en fonction de la distance effective séparant le véhicule du véhicule le précédent.

Pour ce faire, l'unité de traitement d'informations 14 comporte des moyens de comparaison de la distance effective mesurée par le capteur de distance 18 et de la distance de sécurité préconisée.

En particulier, et comme illustré sur la figure 4, les moyens d'affichage 12 sont adaptés pour afficher, sous forme clignotante, le motif de référence lorsque la distance séparant les deux véhicules est inférieure à la distance de sécurité préconisée. Lorsque cette distance est supérieure à la distance de sécurité préconisée, le contour apparaît sous forme d'une image fixe non clignotante.

Les moyens permettant d'assurer le clignotement de l'image sont connus en soi et ne seront pas décrits en détail.

En variante, les moyens d'affichage sont adaptés pour modifier, sous la commande de l'unité centrale de traitement d'informations 14, la couleur du motif de référence 22 suivant que la distance séparant les deux véhicules est supérieure ou inférieure à la distance de sécurité préconisée. Par exemple, lorsque cette distance est supérieure à la distance de sécurité préconisée, le motif 22 apparaît en vert. Si tel n'est pas le cas, celui-ci apparaît en rouge.

On conçoit que la modification de l'apparence de l'image de référence suivant que la distance séparant les deux véhicules soit supérieure ou inférieure à la distance de sécurité préconisée permet au conducteur d'apprécier facilement s'il doit ou non s'éloigner du véhicule le précédant pour rouler en toute sécurité.

En outre, et avantageusement, les moyens d'affichage 12 sont adaptés pour indiquer en clair au-dessous du motif de référence 22 la distance effective séparant le véhicule du véhicule le précédant. Cette indication de distance apparaît sur la figure 2 et est désignée par la référence 36.

Suivant un autre mode de réalisation de l'invention, les moyens d'affichage 12 sont adaptés pour afficher un motif de référence non pas directement sur le pare-brise du véhicule mais sur une lame semi-réfléchissante disposée suivant l'axe de vision du conducteur en avant du pare-brise. Dans ce cas, les moyens d'affichage comportent, outre la lame semi-réfléchissante, des moyens de projection du motif de référence sur la lame semi-réfléchissante. Ces moyens sont par exemple de même type que ceux décrits en regard de la figure 2.

Avec un dispositif tel que décrit ici, le motif de référence étant bidimensionnel, le chauffeur peut facilement déterminer si la distance qu'il maintient avec le véhicule le précédant est suffisante ou non. En effet, même si le véhicule le précédant est légèrement décalé sur la droite ou sur la gauche, le chauffeur peut comparer la hauteur apparente du véhicule avec la hauteur du motif de référence.

De plus, l'appréciation globale des contours respectivement du motif de référence et du contour apparent du véhicule s'effectue facilement dans la mesure où les deux images peuvent être comparées une à une par superposition, sans qu'il soit nécessaire de chercher à privilégier une dimension des deux éléments à comparer. Ainsi, une appréciation intuitive peut être faite des tailles respectives du contour apparent du véhicule et du contour du motif de référence.

## Revendications

1. Installation d'assistance à la conduite pour un véhicule automobile comportant :
- des moyens (16) de mesure de la vitesse du véhicule ;
- des moyens (12) d'affichage en superposition, suivant l'axe de vision du conducteur, d'un motif de référence (22) dont au moins une dimension varie en fonction de la vitesse de circulation actuelle du véhicule mesurée par les moyens de mesure, le motif de référence (22) permettant au conducteur de comparer la distance le séparant du véhicule précédent et une distance de sécurité préconisée pour la vitesse du véhicule, par comparaison d'au moins une dimension du motif de référence (22) et d'une dimension correspondante du contour apparent du véhicule précédent,
**caractérisée en ce que** lesdits moyens d'affichage (12) sont adaptés pour l'affichage d'un motif de référence bidimensionnel (22) délimitant un contour représentatif du contour apparent d'un véhicule précédent espacé de la distance de sécurité et comportant, dans sa partie centrale délimitée par son contour, une région transparente qui laisse percevoir le véhicule précédent pour en comparer le contour apparent avec le contour du motif de référence selon indifféremment l'une ou l'autre des deux dimensions des contours, et **en ce que** l'installation comporte des moyens (28, 30) pour modifier, suivant les deux directions, la taille dudit contour en fonction de la vitesse de circulation actuelle du véhicule.

2. Installation selon la revendication 1, **caractérisée en ce qu'**elle comporte des moyens (18) d'estimation de la distance séparant le véhicule du véhicule le précédant, et des moyens (14) de comparaison de la distance estimée et de la distance de sécurité préconisée pour la vitesse du véhicule, et **en ce que** lesdits moyens d'affichage (12) sont adaptés pour modifier l'aspect du motif de référence (22) si la distance estimée dépasse la distance de sécurité préconisée.

3. Installation selon la revendication 2, **caractérisée en ce que** lesdits moyens d'affichage (12) sont adaptés pour l'affichage du motif de référence (22) sous une forme fixe, si la distance estimée est inférieure à la distance de sécurité préconisée, et sous une forme clignotante, si la distance estimée est supérieure à la distance de sécurité préconisée.

4. Installation selon la revendication 2, **caractérisée en ce que** lesdits moyens d'affichage (12) sont adaptés pour l'affichage du motif de référence (22) avec une première couleur, si la distance estimée est inférieure à la distance de sécurité préconisée, et avec une seconde couleur, si la distance estimée est supérieure à la distance de sécurité préconisée.

5. Installation selon l'une quelconque des revendications précédentes, **caractérisée en ce que** lesdits moyens d'affichage (12) sont adaptés pour l'affichage de l'image sur le pare-brise (24) du véhicule automobile.

6. Installation selon l'une quelconque des revendications 1 à 4, **caractérisée en ce que** lesdits moyens d'affichage comportent une lame semi-réfléchissante disposée suivant l'axe de vision du conducteur et des moyens de projection du motif de référence (22) sur ladite lame semi-réfléchissante.

7. Installation selon l'une quelconque des revendications précédentes, **caractérisée en ce que** lesdits moyens d'affichage (12) comportent des moyens (26) de projection dudit motif de référence bidimensionnel (22), et **en ce que** lesdits moyens (28, 30) pour modifier, suivant les deux directions, la taille dudit contour comportent au moins une lentille mobile (28, 30) disposée en sortie des moyens de projection (26) et des moyens (28A, 30A) de déplacement de la ou chaque lentille (28, 30).

8. Installation selon l'une quelconque des revendications précédentes, **caractérisée en ce qu'**elle comporte des moyens (18) d'estimation de la distance séparant le véhicule du véhicule le précédant, et lesdits moyens d'affichage (12) sont adaptés pour l'affichage en superposition, suivant l'axe de vision du conducteur, de la distance (36) séparant le véhicule du véhicule le précédant.

9. Installation selon l'une quelconque des revendications précédentes, **caractérisée en ce que** le contour défini par le motif de référence (22) constitue un cadre généralement rectangulaire.

10. Installation selon la revendication 9, **caractérisée en ce que** le contour défini par le motif de référence (22) est délimité par quatre éléments angulaires en forme d'équerres disposés aux quatre coins du contour.

## Patentansprüche

1. Fahrservovorrichtung für ein Kraftfahrzeug mit
- Einrichtungen (16) zum Messen der Geschwindigkeit des Fahrzeuges;
- Einrichtungen (12) zum überlagernden Anzeigen in der Blickachse des Fahrers eines Bezugsmusters (22), dessen wenigstens eine Abmessung in Abhängigkeit von der aktuellen Fahrgeschwindigkeit des Fahrzeuges variiert, die durch die Einrichtungen zum Messen gemessen wird, wobei es das Bezugsmuster (22) dem Fahrer erlaubt, den Abstand, der ihn vom vorhergehenden Fahrzeug trennt, mit einem Sicherheitsabstand, der durch die Geschwindigkeit des Fahrzeuges vorgegeben ist, durch einen Vergleich der wenigstens einen Abmessung des Bezugsmusters (22) mit einer Abmessung zu vergleichen, die dem sichtbaren Umriss des vorhergehenden Fahrzeuges entspricht, **dadurch gekennzeichnet, dass** die besagten Anzeigeeinrichtungen (12) so ausgebildet sind, dass sie ein zweidimensionales Bezugsmuster (22) anzeigen können, das einen Umriss begrenzt, der dem sichtbaren Umriss eines vorhergehenden Fahrzeuges entspricht, das im Sicherheitsabstand angeordnet ist, und in seinem mittleren von seinem Umriss begrenzten Teil einen transparenten Bereich aufweist, der es erlaubt, das vorhergehende Fahrzeug wahrzunehmen, um den sichtbaren Umriss mit dem Umriss des Bezugsmusters unterschiedslos in der einen oder der anderen der beiden Abmessungen der Umrisse zu vergleichen, und dass die Vorrichtung Einrichtungen (28, 30) umfasst, die die Größe des besagten Umrisses in den beiden Richtungen in Abhängigkeit von der aktuellen Fahrgeschwindigkeit des Fahrzeuges ändern können.

2. Vorrichtung nach Anspruch 1, **dadurch gekennzeichnet, dass** sie Einrichtungen (18) zum Abschätzen des Abstandes, der das Fahrzeug vom vorhergehenden Fahrzeug trennt, und Einrichtungen (14) zum Vergleichen des geschätzten Abstandes und des Sicherheitsabstandes umfasst, der für die Geschwindigkeit des Fahrzeuges vorgegeben ist, und dass die Anzeigeeinrichtungen (12) so ausgebildet sind, dass sie das Aussehen des Bezugsmusters (22) ändern können, wenn der geschätzte Abstand den vorgegebenen Sicherheitsabstand überschreitet.

3. Vorrichtung nach Anspruch 2, **dadurch gekennzeichnet, dass** die besagten Anzeigeinrichtungen (12) so ausgebildet sind, dass sie ein Bezugsmuster (22) in einer festen Form dann, wenn der geschätzte Abstand unter dem Sicherheitsabstand liegt, und in einer blinkenden Form anzeigen können, wenn der geschätzte Abstand über dem vorgegebenen Sicherheitsabstand liegt.

4. Vorrichtung nach Anspruch 2, **dadurch gekennzeichnet, dass** die besagten Anzeigeeinrichtungen (12) so ausgebildet sind, dass sie ein Bezugsmuster (22) in einer ersten Farbe, wenn der geschätzte Abstand unter dem vorgegebenen Sicherheitsabstand liegt, und in einer zweiten Farbe anzeigen können, wenn der geschätzte Abstand über dem vorgegebenen Sicherheitsabstand liegt.

5. Vorrichtung nach einem der vorhergehenden Ansprüche, **dadurch gekennzeichnet, dass** die besagten Anzeigeeinrichtungen (12) so ausgebildet sind, dass sie ein Bild an der Windschutzscheibe (24) des Kraftfahrzeuges anzeigen können.

6. Vorrichtung nach einem der Ansprüche 1 bis 4, **dadurch gekennzeichnet, dass** die besagten Anzeigeeinrichtungen eine halbdurchlässige Platte, die in der Blickachse des Fahrers angeordnet ist, und Einrichtungen zum Projizieren des Bezugsmusters (22) auf die besagte halbdurchlässige Platte umfassen.

7. Vorrichtung nach einem der vorhergehenden Ansprüche, **dadurch gekennzeichnet, dass** die besagten Anzeigeeinrichtungen (12) Einrichtungen (26) zum Projizieren des besagten zweidimensionalen Bezugsmusters (22) umfassen, und dass die besagten Einrichtungen (28, 30) zum Ändern der Größe des besagten Umrisses in den beiden Richtungen wenigstens eine bewegliche Linse (28, 30), die am Ausgang der Projektionseinrichtungen (26) angeordnet ist, und Einrichtungen (28A, 30A) zum Versetzen der oder jeder Linse (28, 30) umfassen.

8. Vorrichtung nach einem der vorhergehenden Ansprüche, **dadurch gekennzeichnet, dass** sie Einrichtungen (18) zum Abschätzen des Abstandes umfasst, der das Fahrzeug vom vorhergehenden Fahrzeug trennt, und dass die besagten Anzeigeinrichtungen (12) so ausgebildet sind, dass sie in einer Überlagerung in der Blickachse des Fahrers den Abstand (36) anzeigen können, der das Fahrzeug von vorhergehenden Fahrzeug trennt.

9. Vorrichtung nach einem der vorhergehenden Ansprüche, **dadurch gekennzeichnet, dass** der vom Bezugsmuster (22) begrenzte Umriss einen im Wesentlichen rechteckigen Rahmen bildet.

10. Vorrichtung nach Anspruch 9, **dadurch gekennzeichnet, dass** der Umriss, der durch das Bezugsmuster (22) bestimmt ist, von vier winkligen Elementen in Form von Winkeln begrenzt ist, die an vier Ecken des Umrisses angeordnet sind.

## Claims

1. Driving assistance assembly for a motor vehicle comprising:
• means (16) for measuring the speed of the vehicle,
• means (12) for overlay display visual axis of the driver of a reference motif (22), of which at least one dimension varies as a function of the current running speed of the vehicle measured by the measuring means, wherein the reference motif (22) enables the driver to compare the distance separating him/her from the vehicle in front and a recommended safety distance for the speed of the vehicle, by comparing at least one dimension of the reference motif (22) and a corresponding dimension of the apparent contour of the vehicle in front,
**characterised in that** said display means (12) are adapted for the display of a two-dimensional reference motif (22) defining a contour representing the apparent contour of a vehicle in front located at the safety distance, and in its central section defined by its contour comprising a transparent region, which allows the vehicle in front to be seen for comparing the apparent contour thereof with the contour of the reference motif according to either one of the two dimensions of the contours, and **in that** the assembly comprises means (28, 30) for modifying in both directions the size of said contour as a function of the current running speed of the vehicle.

2. Assembly according to Claim 1, **characterised in that** it comprises means (18) for estimating the distance separating the vehicle from the vehicle in front, and means (14) for comparing the estimated distance and the recommended safety distance for the speed of the vehicle, and **in that** said display means (12) are adapted to modify the appearance of the reference motif (22) if the estimated distance exceeds the recommended safety distance.

3. Assembly according to Claim 2, **characterised in that** said display means (12) are adapted for display of the reference motif (22) in a constant form, if the estimated distance is less than the recommended safety distance, and in a flashing form, if the estimated distance is more than the recommended safety distance.

4. Assembly according to Claim 2, **characterised in that** said display means (12) are adapted for display of the reference motif (22) with a first colour, if the estimated distance is less than the recommended safety distance, and with a second colour, if the estimated distance is more than the recommended safety distance.

5. Assembly according to any one of the preceding claims, **characterised in that** said display means (12) are adapted for display of the image on the windscreen (24) of the motor vehicle.

6. Assembly according to any one of preceding claims I to 4, **characterised in that** said display means comprise a semi-reflective strip disposed in the visual axis of the driver and means for projecting the reference motif (22) onto said semi-reflective strip.

7. Assembly according to any one of the preceding claims, **characterised in that** said display means (12) comprise means (26) for projecting said two-dimensional reference motif (22), and **in that** said means (28, 30) for modifying in both directions the size of said contour comprise at least one mobile lens (28, 30) disposed at the output of the projection means (26) and means (28A, 30A) for displacing the or each lens (28, 30).

8. Assembly according to any one of the preceding claims, **characterised in that** it comprises means (18) for estimating the distance separating the vehicle from the vehicle in front, and said display means (12) are adapted for overlay display along the visual axis of the driver of the distance (36) separating the vehicle from the vehicle in front of it.

9. Assembly according to any one of the preceding claims, **characterised in that** the contour defined by the reference motif (22) constitutes a generally rectangular frame.

10. Assembly according to Claim 9, **characterised in that** the contour defined by the reference motif (22) is defined by four angular elements in the shape of set squares disposed at the four corners of the contour.
